# EUROPÄISCHE PATENTANMELDUNG

(11) **EP 0 899 544 A2**
(43) Veröffentlichungstag der Anmeldung: **03.03.1999**
(21) Anmeldenummer: 98112518.0
(22) Anmeldetag: 07.07.1998
(51) Int. Cl.: G01D 5/347

(54) **Optische Weg- und/oder Positionssensoranordnung**

(30) Priorität: 30.07.1997 DE 29713546 U
(71) Anmelder: Festo AG & Co, 73734 Esslingen (DE)
(72) Erfinder: Stoll, Kurt, Dr., 73732 Esslingen (DE); Arbter, Jürgen, 71334 Waiblingen (DE)
(74) Vertreter: Vetter, Hans, Dipl.-Phys. Dr.

(57) **Zusammenfassung**

Es wird eine optische Weg- und/oder Positionssensoranordnung mit einem entlang einer Meßstrecke bewegbaren Körper und mit einer Licht zu einer Lichtempfängeranordnung (10) sendenden Lichtsenderanordnung (11) vorgeschlagen, wobei der Körper auf die Lichtzuführung zur Lichtempfängeranordnung (10) einwirkt und wobei das in der Lichtempfängeranordnung (10) erzeugte elektrische Signal zur Bildung des Meßsignals dient. Die Lichtempfängeranordnung (10) erstreckt sich im wesentlichen über die Länge der Meßstrecke (M), und der Körper ist als die Lichtempfängeranordnung (10) positionsabhängig gegenüber der Lichtsenderanordnung (11) abschirmender Abdeckkörper (12) ausgebildet, wobei der abgeschirmte Bereich der Lichtempfängeranordnung (10) in der einen Bewegungsrichtung des Abdeckkörpers (12) zunimmt und in der anderen entgegengesetzten Bewegungsrichtung abnimmt. Hierdurch kann mittels einer konstruktiv sehr einfachen und kostengünstigen Sensoranordnung ein exakter Positionswert erfaßt werden, wobei keine Bezugs- oder Startposition erforderlich ist.

## Beschreibung

Die Erfindung betrifft eine optische Weg- und/oder Positionssensoranordnung mit einem entlang einer Meßstrecke bewegbaren Körper und mit einer Licht zu einer Lichtempfängeranordnung sendenden Lichtsenderanordnung, wobei der Körper auf die Lichtzuführung zur Lichtempfängeranordnung einwirkt und wobei das in der Lichtempfangeranordnung erzeugte elektrische Signal zur Bildung des Meßsignals dient.

Bei einer aus der GB 20 62 124 bekannten optischen Sensoranordnung dieser Gattung besitzt die Kolbenstange einer Kolben-Zylinder-Anordnung in der Verschieberichtung abwechselnd stark reflektierende und schwach reflektierende Markierungen, die vom Lichtstrahl einer Reflexionslichtschranke abgetastet werden. Diese Markierungen können somit gewünschte Positionen vorgeben, an denen die Kolbenstange beispielsweise positioniert werden soll. Der Nachteil dieser bekannten Anordnung besteht darin, daß nicht beliebige Positionen, sondern nur entsprechende Markierungen und vorbestimmte Positionen erkannt und eingestellt werden können. Weiterhin muß diese Sensoranordnung von einer vorbestimmten Anfangsposition aus die Bewegung beginnen, sonst können die verschiedenen Markierungen nicht voneinander unterschieden werden, und selbst dann muß eine Zähleinrichtung vorgesehen sein, die das Passieren von Markierungen in der gleichen Richtung registriert.

Eine ähnliche Einrichtung ist aus der DE-GM 92 09 980 bekannt. Dort werden ebenfalls strichartige Markierungen in der Längsrichtung auf einer Kolbenstange optisch erfaßt und gezählt. Auch hier muß von einer Anfangsposition und von einem bestimmten Zählerstand aus gezahlt werden, um definierte Ergebnisse zu erhalten. Die Positionsgenauigkeit hängt vom Abstand der Markierungen ab. Bei sehr engem Abstand wird die erforderliche optische Abtasteinrichtung aufwendig und teuer.

Eine Aufgabe der vorliegenden Erfindung besteht darin, eine optische Weg- und/oder Positionssensoranordnung der eingangs genannten Gattung zu schaffen, die gegenüber herkömmlichen Sensoranordnungen bei größerer Genauigkeit keine Bezugs- bzw. Startposition benötigt.

Diese Aufgabe wird erfindungsgemäß dadurch gelöst, daß sich die Lichtempfängeranordnung im wesentlichen über die Länge der Meßstrecke erstreckt und daß der Körper als die Lichtempfängeranordnung positionsabhängig gegenüber der Lichtsenderanordnung abschirmender Abdeckkörper ausgebildet ist, wobei der abgeschirmte Bereich der Lichtempfängeranordnung in der einen Bewegungsrichtung des Abdeckkörpers zunimmt und in der anderen entgegengesetzten Bewegungsrichtung abnimmt.

Bei der erfindungsgemäßen Sensoranordnung sind keinerlei Markierungen oder Zählvorgänge von Markierungen erforderlich. In jeder Position des Abdeckkörpers wird ein absoluter Meßwert für die Position erzeugt, der unabhängig von einer Bezugs- oder Startposition ist, so daß eine solche nicht benötigt wird. Da der Lichteinfall auf die Lichtempfängeranordnung proportional zur jeweiligen Position des Abdeckkörpers ist, kann eine sehr exakte Positionsmessung durchgeführt werden. Die Änderung des Meßwerts pro Zeiteinheit führt zu einer exakten Bestimmung der Geschwindigkeit des Abdeckkörpers. Da kein exakt gebündelter definierter Lichtstrahl zur Messung erforderlich ist, kann auf aufwendige und teure optische Hilfsmittel verzichtet werden, so daß als Lichtsenderanordnung beispielsweise eine einfache Leuchtdiode und als Lichtempfängeranordnung ein flächiges Fotoelement verwendet werden kann. Dies führt zu einer konstruktiv sehr einfachen und kostengünstigen Sensoranordnung.

Durch die in den Unteransprüchen aufgeführten Maßnahmen sind vorteilhafte Weiterbildungen und Verbesserungen der im Anspruch 1 angegebenen Weg- und/oder Positionssensoranordnung möglich.

Die Lichtempfängeranordnung kann entweder als lichtsensitives Flächenelement ausgebildet sein, oder sie besteht aus mehreren entlang der Meßstrecke angeordneten lichtsensitiven Elementen, sofern eine längere Meßstrecke gebildet werden soll. Entsprechend besteht die Lichtsenderanordnung aus einer oder aus mehreren Leuchtdioden, wobei prinzipiell auch andere Lichtquellen verwendbar sind.

Der Abdeckkörper ist zweckmäßigerweise platten- oder leistenartig und breiter als die Lichtempfängeranordnung ausgebildet, um in der Querrichtung zur Meßstrecke eine vollständige Abschirmung zu erreichen.

Die Meßstrecke und die Bewegungen des Abdeckkörpers verlaufen im einfachsten Falle linear, jedoch kann die Meßstrecke bei einer Ausbildung als Drehwinkelsensor auch kreisförmig ausgebildet sein, und der Abdeckkörper ist dann im Kreismittelpunkt drehbar gelagert.

Der Lichtempfängeranordnung ist zweckmäßigerweise ein Meßverstärker nachgeschaltet, um eine Signalverstärkung zu erreichen.

Um Schwankungen der Lichtstärke infolge Alterung, Temperatureinfluß od.dgl. auszuschließen, sind in vorteilhafter Weise Mittel zum Regeln der Lichtstärke der Lichtsenderanordnung auf einen konstanten Wert vorgesehen.

Hierzu eignet sich insbesondere eine Ausführung, bei der eine weitere Lichtempfängeranordnung zur Messung des Ist-Werts der Lichtstärke im Wirkungsbereich der Lichtsenderanordnung, jedoch außerhalb des Abschirmungsbereichs des Abdeckkörpers, angeordnet ist, wobei eine mit diesem Ist-Wert beaufschlagte Stromregeleinrichtung den Versorgungsstrom für die Lichtsenderanordnung vorgibt.

Besonders geeignet ist eine solche optische Weg- und/oder Positionssensoranordnung für eine Ventilanordnung zur Erfassung der Position des Ventilglieds, wobei der Abdeckkörper mit dem Ventilglied der Ventilanordnung verbunden ist. Vorzugsweise ist dabei der Abdeckkörper der Magnetanker der als Magnetventil ausgebildeten Ventilanordnung, oder er ist mit diesem Magnetanker verbunden. Dabei trägt zweckmäßigerweise das freie Ende des sich durch die Magnetspule erstreckenden Magnetankers den Abdeckkörper oder ist als Abdeckkörper ausgebildet.

Ausführungsbeispiele der Erfindung sind in der Zeichnung dargestellt und in der nachfolgenden Beschreibung näher erläutert. Es zeigen:
- Fig. 1: eine schematische Darstellung des Meßprinzips,
- Fig. 2: ein Schaltbild zur Bildung des Meßsignals sowie zur Regelung der Lichtstärke und
- Fig. 3: ein mit einer solchen Sensoranordnung versehenes Magnetventil als Ausführungsbeispiel der Erfindung.

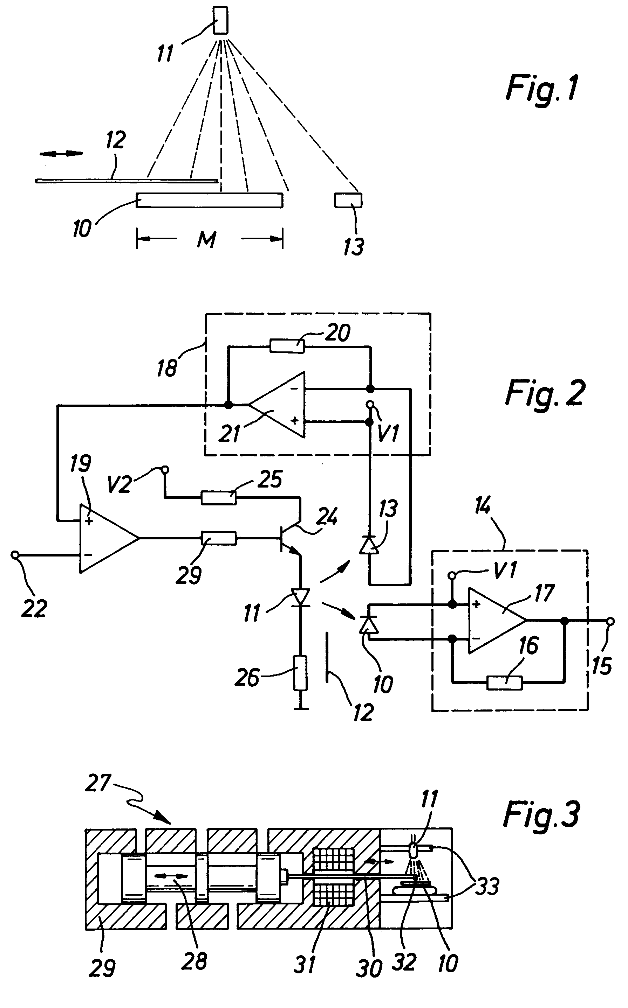

In der schematischen Darstellung gemäß Fig. 1 zur Erläuterung der Wirkungsweise wird eine als Fotozelle 10 oder Fotozellenanordnung ausgebildete Lichtempfängeranordnung von einer als Leuchtdiode 11 ausgebildeten Lichtquelle oder Lichtsenderanordnung beleuchtet. Die Fotozelle 10 oder Fotozellenanordnung erstreckt sich als längliches Flächenelement entlang einer Meßstrecke M. Je nach Länge der Meßstrecke M kann es sich um eine langgestreckte, streifenförmige Fotozelle 10 handeln oder um mehrere aneinandergereihte Fotozellen, die beispielsweise als Fotodioden ausgebildet sein können. Anstelle einer Leuchtdiode 11 kann prinzipiell auch eine andere Lichtquelle verwendet werden. Die Fotozelle 10 muß über ihre gesamte Länge möglichst gleichmäßig beleuchtet werden, so daß bei sehr langen Meßstrecken M auch mehrere entlang dieser Meßstrecke M aneinandergereihte Lichtquellen vorgesehen sein können. Ein blendenartiger Abdeckkörper 12 ist entlang der Meßstrecke M verschiebbar angeordnet und schirmt dabei die Fotozelle 10 mehr oder weniger gegenüber der Leuchtdiode 11 ab. Dies bedeutet, in der einen Endstellung wird die Fotozelle 10 vollständig von der Leuchtdiode 11 beleuchtet, und in der anderen Endstellung ist die Fotozelle 10 vollständig abgeschirmt bzw. abgedeckt durch den Abdeckkörper 12. Dieser ist hierzu breiter als die Fotozelle 10 ausgebildet und kann diese auch zumindest seitlich übergreifen, um eine möglichst vollständige Abschirmung über die jeweilige Länge der Meßstrecke zu erreichen.

Wird der Abdeckkörper 12 gemäß Fig. 1 nach rechts verschoben, so wird die Fotozelle 10 immer stärker abgedeckt, und der Fotostrom nimmt infolge des linearen Zusammenhangs zwischen dem Weg und dem Fotostrom entsprechend linear ab. Der Fotostrom kann über ein Meßgerät erfaßt werden und ist ein direktes Maß für den Weg bzw. die Position des Abdeckkörpers 12.

Eine weitere Fotozelle 13 oder Fotozellenanordnung wird durch dieselbe Leuchtdiode 11 bzw. Lichtquelle beleuchtet, kann jedoch durch den Abdeckkörper 12 nicht abgedeckt werden, so daß sie ständig beleuchtet wird. Sie dient zur Regelung der Lichtstärke der Leuchtdiode 11 oder Lichtquelle auf einen konstanten Wert, wie dies in Fig. 2 noch näher erläutert wird.

Anstelle der in Fig. 1 dargestellten linearen Verschiebung des Abdeckkörpers 12 kann dieser Abdeckkörper 12 auch als drehbar gelagerte Segmentblende ausgebildet sein, wobei die streifenförmige Fotozelle 10 bzw. Fotozellenanordnung in einem Kreis oder Teilkreis um die Drehachse angeordnet ist. Hierdurch kann ein Drehwinkelgeber realisiert werden.

Gemäß dem in Fig. 2 dargestellten Schaltbild wird der in der Fotozelle 10 erzeugte Fotostrom durch einen Meßverstärker 14 verstärkt, an dessen Ausgangsanschluß 15 das vom Weg bzw. der Position des Abdeckkörpers 12 abhängige verstärkte Meßsignal anliegt. Der Meßverstärker 14 besteht im dargestellten Ausführungsbeispiel aus einem über einen Widerstand 16 rückgekoppelten Operationsverstärker 17, dessen nicht-invertierender Eingang mit einer eingeprägten Spannung V1 beaufschlagt ist.

Der Fotostrom der Fotozelle 13 wird ebenfalls über einen Meßverstärker 18 verstärkt und dem nicht-invertierenden Eingang eines als Operationsverstärker ausgebildeten Vergleichers 19 zugeführt. Der Meßverstärker 18 ist entsprechend dem Meßverstärker 14 aufgebaut und besteht ebenfalls aus einem über einen Widerstand 20 rückgekoppelten Operationsverstärker 21.

Dem invertierenden Eingang des Vergleichers 19, der beispielsweise als Differenzverstärker ausgebildet sein kann, wird über eine Eingangsklemme 22 ein Sollwertsignal für die Lichtstärke der Leuchtdiode 11 zugeführt. Das Ausgangssignal des Vergleichers 19 regelt über einen Widerstand 23 und einen Steuertranistor 24 den Strom durch die Leuchtdiode 11, der die Lichtstärke vorgibt. Ein Widerstand 25, die Kollektor-Emitter-Strecke des Steuertransistors 24, die Leuchtdiode 11 und ein weiterer Widerstand 26 bilden dabei eine Reihenschaltung, an der eine Versorgungsspannung V2 angelegt ist. Durch die beschriebene geschlossene Regelschleife bleibt die Lichtstärke der Leuchtdiode 11 konstant, unabhängig von Alterungserscheinungen, Spannungsschwankungen der Temperatureinflüssen. Sind mehrere Leuchtdioden 11 oder Fotozellen 10 vorgesehen, so können diese jeweils in einer Parallel- oder Reihenschaltung angeordnet sein.

Bei dem in Fig. 3 dargestellten Ausführungsbeispiel ist ein als Magnetventil 27 ausgebildetes Stetigventil dargestellt. Ein als Ventilschieber ausgebildetes Ventilglied 28 ist in einem Ventilgehäuse 29 verschiebbar geführt. Ein axiales Ende des Ventilglieds 28 ist mit einem langgestreckten Anker 30 verbunden, der sich in axialer Richtung durch eine Magnetspulenanordnung 31 im Ventilgehäuse 29 hindurcherstreckt und dessen freies Ende 32 einen Abdeckkörper entsprechend dem Abdeckkörper 12 bildet. Alternativ hierzu kann selbstverständlich auch am freien Ende 32 des Ankers 30 ein Abdeckkörper 12 angebracht oder angeformt sein. Dieses als Abdeckkörper dienende freie Ende 32 des Ankers 30 greift wiederum gemäß Fig. 1 in den Strahlengang zwischen der Leuchtdiode 11 und der Fotozelle 10 ein, so daß eine entsprechende optische Weg- und/oder Positionssensoranordnung an der einen Stirnseite des Ventilgehäuses 29 gebildet wird. Die Leuchtdiode 11 und die Fotozelle 10 sind an einer Halterung 33 angeordnet und können selbstverständlich auch in einer Ausnehmung des Ventilgehäuses 29 angeordnet sein. Alternativ dazu kann ein nicht dargestelltes ansetzbares Abdeckgehäuse vorgesehen sein.

Mit der dargestellten und beschriebenen Anordnung kann die Position des Ventilglieds 28 jederzeit exakt bestimmt werden, oder die Sensoranordnung kann auch zur Positionsregelung des Ventilglieds 28 verwendet werden. Anstelle des dargestellten Magnetventils 27 mit als Ventilschieber ausgebildetem Ventilglied 28 können selbstverständlich auch beliebige andere Ventilarten entsprechend ausgestattet werden, z.B. auch Schaltventile.

## Patentansprüche

1. Optische Weg- und/oder Positionssensoranordnung mit einem entlang einer Meßstrecke bewegbaren Körper und mit einer Licht zu einer Lichtempfängeranordnung sendenden Lichtsenderanordnung, wobei der Körper auf die Lichtzuführung zur Lichtempfängeranordnung einwirkt und wobei das in der Lichtempfängeranordnung erzeugte elektrische Signal zur Bildung des Meßsignals dient, dadurch gekennzeichnet, daß sich die Lichtempfängeranordnung (10) im wesentlichen über die Länge der Meßstrecke (M) erstreckt und daß der Körper als die Lichtempfängeranordnung (10) positionsabhängig gegenüber der Lichtsenderanordnung (11) abschirmender Abdeckkörper (12; 32) ausgebildet ist, wobei der abgeschirmte Bereich der Lichtempfängeranordnung (10) in der einen Bewegungsrichtung des Abdeckkörpers (12; 32) zunimmt und in der anderen entgegengesetzten Bewegungsrichtung abnimmt.

2. Sensoranordnung nach Anspruch 1, dadurch gekennzeichnet, daß die Lichtempfängeranordnung (10) als lichtsensitives Flächenelement, insbesondere als Fotodiode oder Fotozelle, ausgebildet ist oder aus mehreren entlang der Meßstrecke (M) angeordneten lichtsensitiven Elementen besteht.

3. Sensoranordnung nach Anspruch 1 oder 2, dadurch gekennzeichnet, daß die Lichtsenderanordnung (11) aus einer oder aus mehreren Leuchtdioden besteht.

4. Sensoranordnung nach einem der vorhergehenden Ansprüche, dadurch gekennzeichnet, daß der Abdeckkörper (12; 32) platten- oder leistenartig ausgebildet ist.

5. Sensoranordnung nach einem der vorhergehenden Ansprüche, dadurch gekennzeichnet, daß die Meßstrecke (M) und die Bewegung des Abdeckkörpers (12; 32) linear verläuft oder kreisförmig ausgebildet ist und der Abdeckkörper im Kreismittelpunkt drehbar gelagert ist, wobei der Abdeckkörper vorzugsweise kreisausschnittförmig ausgebildet ist.

6. Sensoranordnung nach einem der vorhergehenden Ansprüche, dadurch gekennzeichnet, daß der Lichtempfängeranordnung (10) ein Meßverstärker (14) nachgeschaltet ist.

7. Sensoranordnung nach einem der vorhergehenden Ansprüche, dadurch gekennzeichnet, daß Mittel zum Regeln der Lichtstärke der Lichtsenderanordnung (11) auf einen konstanten Wert vorgesehen sind.

8. Sensoranordnung nach Anspruch 6, dadurch gekennzeichnet, daß eine weitere Lichtempfängeranordnung (13) zur Messung des Ist-Werts der Lichtstärke im Wirkungsbereich der Lichtsenderanordnung (11), jedoch außerhalb des Abschirmungsbereichs des Abdeckkörpers (12; 32), angeordnet ist, und daß eine mit diesem Ist-Wert beaufschlagte Stromregeleinrichtung (18, 19, 24) den Versorgungsstrom für die Lichtsenderanordnung (11) vorgibt.

9. Sensoranordung für eine Ventilanordnung nach einem der vorhergehenden Ansprüche, dadurch gekennzeichnet, daß der Abdeckdeckkörper (12) mit einem Ventilglied (28) der Ventilanordnung (27) verbunden ist, wobei vorzugsweise der Abdeckkörper (32) der Magnetanker (30) der als Magnetventil ausgebildeten Ventilanordnung (27) ist oder mit diesem Magnetanker (30) verbunden ist.

10. Sensoranordnung nach Anspruch 9, dadurch gekennzeichnet, daß das das freie Ende (32) des sich durch die Magnetspulenanordnung (31) erstreckenden Magnetankers (30) den Abdeckkörper trägt oder als Abdeckkörper ausgebildet ist.
